# EUROPEAN PATENT SPECIFICATION

(11) **EP 2 206 072 B1**
(45) Date of publication and mention of the grant of the patent: **15.05.2013**
(21) Application number: 08840843.0
(22) Date of filing: 14.10.2008
(51) Int. Cl.: G06K 7/10, G06K 7/00

(54) **RFID ANTENNA SELECTION SYSTEM AND METHOD**
RFID-ANTENNENAUSWAHLSYSTEM UND VERFAHREN
SYSTÈME ET PROCÉDÉ DE SÉLECTION D'ANTENNES RFID

(30) Priority: 22.10.2007 US 960957 P; 06.10.2008 US 245954
(43) Date of publication of application: 14.07.2010
(73) Proprietor: Stanley Black & Decker, Inc., New Britain, CT 06053 (US)
(72) Inventor: LANCE, Carl, Lowell MI 49331 (US)
(74) Representative: Shaya, Darrin Maurice
(86) International application number: PCT/US2008/079843
(87) International publication number: WO 2009/055279

(56) References cited:
- EP-A- 1 703 435
- WO-A-2004/114241
- WO-A-2007/104339
- US-A1- 2006 012 465

## Description

The present invention relates to Radio Frequency Identification (RFID) technology. More particularly, the present invention relates to method and apparatus for efficient reading of RFID tags using multiple antennas.

US 2006/0012465 discloses a method of reducing the number of conflicts between RFID tags during their interrogation process. This is achieved using several sector antennae such that the power output of each antenna is increased in sequential stages.

Document WO 2004/114241 discloses a system for storing and tracking objects. The storage system may be compartmentalized and include antennae to detect and track RFIDs.

One or more embodiments of the present invention provide a method and apparatus for reading information contained by RFID tags. The method of reading a plurality of RFID tags using a plurality of antennas includes ranking a plurality of antennas based on RFID tags readable thereby, wherein the antenna that can read the most RFID tags will receive a highest ranking, and the antenna that can read the most RFID tags that were not read by another, higher ranked antenna will receive the next highest ranking, progressively until each of the antennas are ranked, and executing a read operation wherein the antennas are used in series to read the RFID tags, commencing with using the highest ranking antenna and subsequently using the antennas with progressively lower rankings to read the RFID tags.

Another aspect of one or more embodiments of the present invention provides a storage structure that includes a compartment having space to store a plurality of items. A plurality of antennas are provided and configured to transmit electromagnetic energy to interrogate a plurality of RFID tags, disposed on at least some items stored in the storage compartment. In addition at least one RFID reader is operatively connected to the plurality of antennas and configured to independently control a read operation of each antenna of the plurality of antennas. A memory is configured to receive and store information output by the RFID reader, the information being sufficient to identify, for each antenna, a number of readable RFID tags and an identity of each of the readable RFID tags. In addition a processor is configured to access the memory and to rank the antennas in accordance with the stored information. The antenna that can read the most RFID tags that were not read by another, higher ranked antenna, will receive the next highest ranking, progressively until each of the antennas are ranked.

Aspects of embodiments of the invention may include a machine readable medium encoded with machine executable instructions which, when executed perform the foregoing method.

Additional and/or alternative objects, features, aspects, and advantages of the present invention will become apparent from the following description, the accompanying drawings, and the appended claims.

For a better understanding of embodiments of the present invention as well as other objects and further features thereof, reference is made to the following description which is to be used in conjunction with the accompanying drawings, where:
FIG. 1 is a schematic representation of an RFID tag interrogation apparatus using plurality of antennas which can be used in accordance with one or more embodiments of the present invention.
FIG. 2 shows an arrangement of antennas in accordance with an embodiment of the present invention.
FIG. 3 shows a flow chart of an antenna ranking algorithm in accordance with an embodiment of the invention.
FIG. 4 illustrates a storage structure in the form of a cart in accordance with an embodiment of the present invention.

The information contained in an RFID tag is designed to locate and identify an item associated with the RFID tag. The information is usually used for monitoring and/or tracking inventory of items, identification of types of items, determining status, location and conditions associated with the items, and managing processes that use the items of interest. Such monitoring of items should be done accurately, in a timely manner, while avoiding omissions, misidentifications, or delays caused by failures to accomplish required monitoring tasks during allocated time periods.

An embodiment of the present invention provides an efficient system that enables a plurality of antennas to read a group of RFID tags, wherein the antennas are used (or energized) in series, but in an order that promotes antennas (or the antenna) that are (is) more likely to read the greatest number of RFID tags, at least initially, and then subsequently energizes (or uses) antennas that are most likely to read the greatest number of RFID tags that were not previously read by a prior antenna. In this way, if an RFID tag reading operation is interrupted prior to energizing (or utilizing) each antenna in the sequence, it is more likely that the subset of antennas that did perform the read operation will have taken a complete and accurate polling or inventory of all of the RFID tags in the storage volume.

In high demand applications, for example in bio-medical or high technology fields, a group of RFID tags should be read and identified with low error probability within an allocated time period, regardless of the spatial distribution of the RFID tags within a storage volume. Such high demand applications may involve quick (short time interval) removing and/or addition of RFID tags from and to the storage volume. Accurate monitoring of RFID tags under such condition may be difficult to satisfy using only one RF antenna functioning as a sole source of the interrogating RF field because of the existence of localized "dead zones," regions characterized by vanishing or difficult to detect RF fields, known also as "antenna nulls" that impede detection of any RFID tag that can be, at least by chance, placed in such region.

In general, it is at least impractical to design a single antenna with no nulls in any arbitrary storage volume. Solutions for "antenna null" related difficulties are usually achieved by arrangements of a plurality of antennas emitting partially overlapping near antenna fields, designed specifically to compensate for individual antenna nulls in the storage volume. This approach takes advantage of the spatial superposition of relatively strong fields emitted by other antennas in the arrangement of plurality of antennas to interrogate all null locations. In addition, the reliability of the RFID tag reading process can be improved by redundant repetition of the reading process using the plurality of the antennas, usually resulting in improved probability of identification and accuracy of transmitted information at least by statistically improved signal-to-noise ratios.

In principle, every antenna from a plurality of antennas can use a distinct RF emission and interrogate RFID tags in parallel and substantially independently from the remaining antennas at least during a fraction of the RF field emission. In contrast, a serial interrogating operation of the antenna, which interrogation uses only a single RFID reader, and wherein only one antenna from the plurality of antennas operates at a time, with no substantial temporal overlap (except for possible short transient switching time) of emissions, utilizing common driving and detecting circuitries, is frequently desired at least because of the advantages in relative simplicity and lower cost. Various more complex combination schemes of parallel - serial arrangement of RFID tags interrogation may be used where, for example, sets of the antennas can be arranged to operate in parallel while each antenna in the set is operated in sequence, or vice versa.

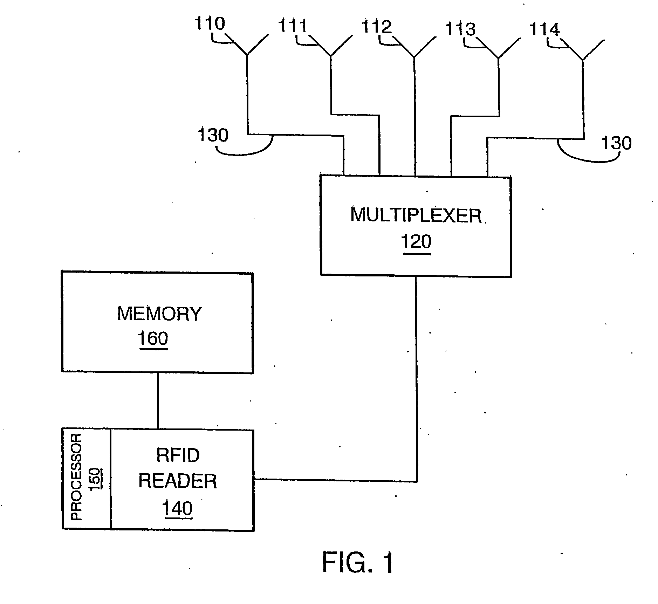

One embodiment of RFID tag interrogation using a serial arrangement of antenna operation is given schematically in Fig. 1. Each antenna from a plurality of antennas 110 - 114 is connected to a multiplexer 120 via a plurality of transmission cables 130. In an alternate embodiment, wireless connectivity may be employed. The multiplexer 120 sequentially connects each individual antenna to an RFID reader 140. In one embodiment, only one of the antennas 110-114 is actively driven to radiate at any one time (except for possible overlapping transient radiation of antenna during the switching of antennas) and only the signal collected by the one driven antenna is recorded (at that time). Functions of the multiplexer 120 may be controlled by the RFID reader 140 using a processor 150. The processor 150 may execute programs that determine time periods during which antennas from the plurality of antennas will be switched to radiate. Also, the processor 150 may be programmed to associate a signal received from the RFID tags with the radiating antenna and compose a data matrix comprising data on antennas and RFID tags detected by the particular antennas. In the embodiment shown in Fig. 1, the processor 150 is incorporated in the RFID reader 140, although the processor 150 may be provided separately from the reader 140 in another embodiment. In this embodiment, the processor 150 may also control the transfer of data matrices comprising data on antennas and RFID tags detected by the particular antennas between the RFID reader 140 and an external memory 160. In addition, the processor 150 may perform an antenna ranking function or share tasks associated with an antenna ranking process with additional data processing devices not shown in Fig. 1. In some embodiments, the RFID reader 140 can perform additional user interface, data input/output, networking, or monitoring and process control functions as desired in particular applications. In various embodiments, the processor may take the form of hardware, software, circuitry or any combination thereof.

In the multiplexed arrangement with only one RFID reader, the duration of the reading process may become proportional to the number of utilized antennas. The duration of RFID reading further increases when requirements for reduced error probabilities necessitate numerous repetitions of reading sequences.

During the reading process, a disturbance or disruption of the RF fields or the RFID tags may tend to reduce the reading process accuracy. Such disturbance or disruption may include gaining intentional or unintentional access to the storage volume (e.g. by opening the storage container or cart) and adding, removing or rearranging the RFID tags, or intentional or accidental interventions on, or relocating or relative positioning of, the antennas and antenna supporting circuitry (relative to one another and/or relative to the RFID tags).

Advantages in RFID tag reading and identification accuracy gained by implementation of increasing number of redundant antennas may be compromised by proportional increase of limited accessibility time intervals, due to the additional time required to read the additional antennas.

One or more embodiments of the present invention may improve the accuracy of RFID tag interrogation using a plurality of sequentially read antennas. In one embodiment, the read time intervals are significantly reduced by use of a read algorithm or algorithms designed to provide sufficient accuracy of RFID tag monitoring even when the full reading sequence may be interrupted and only partial data is available (e.g. as a result of a read operation being disrupted by rearrangement, removal or addition of RFID tags).

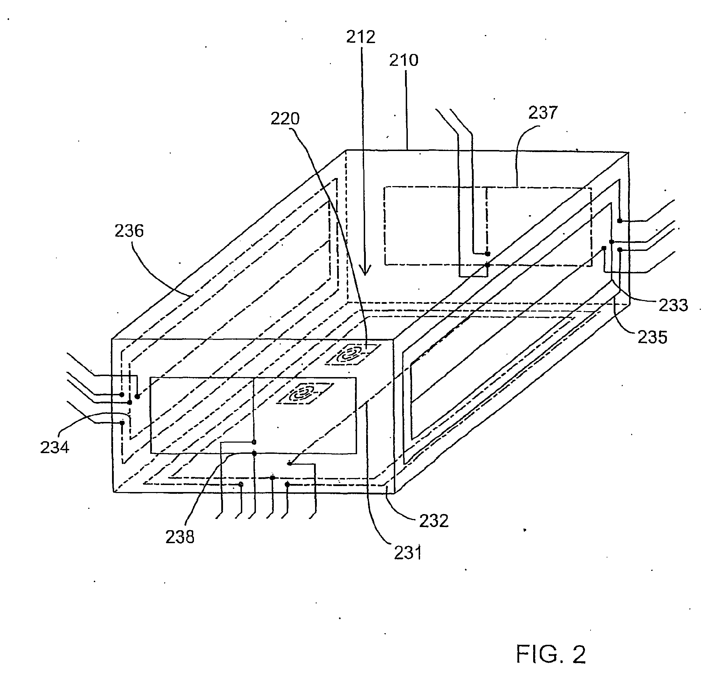

An embodiment of a storage structure that can be employed in accordance with the present invention is shown in Fig. 2. A storage compartment 210 of this embodiment is in the form of a rectangular box, container, or drawer with an open top. It should be appreciated, however, that any storage region or volume may be employed. The storage volume or region used in the present invention need not be an enclosed space or have a particular shape. Rather any configuration for holding or supporting RFID tags can be used, including single flat, open surface or suspended in three dimensions, etc. In the illustrated embodiment, the inside volume of the container 210 incorporates space for storage a plurality of items marked by RFID tags 220. The container 210 defines a space 212 bounded by a bottom and side walls incorporating a plurality of antennas 231-238. Antennas 231-238 are operatively connected to a single RFID reader 140 (although in another embodiment, more than one RFID reader may be used) configured to independently control a read operation of each antenna of the plurality of antennas via a multiplexer 120 (RFID reader and multiplexer not shown in Fig. 2). The RFID reader includes a processor that controls the multiplexer and memory configured to receive and store information output by the RFID reader.

The plurality of antennas includes both loop antennas and bi-lobal "figure 8" antennas configured to mutually compensate for antenna nulls inside the storage volume 210. Three loop antennas and five "figure 8" antennas, operating in the ISM band in the vicinity of 13.56 MHz, for example, may be chosen for the embodiment depicted in Fig. 2 to provide redundant identification and reading of the RFID tags 220 stored in the storage volume 210. An antenna system generally similar to antennas 231-238 is described in the U.S. Patent Application No. 2007/0046552, which is here incorporated by reference in its entirety, and can be used with the methodology and system of the present invention. The embodiment in Fig. 2 utilizes antennas denoted as: Large Figure 8 231, Large Loop 232, Small Figure 8-R 233, Small Figure 8-L 234, Small Loop-R 235, Small Loop-L 236, Figure 8-B 237, and Figure 8-F 238.

Different antennas from the plurality of antennas have different geometries and positions, resulting in different sensitivities and ability to detect individual RFID tags. Accordingly, some antennas will detect and record more RFID tags than other antennas, and will be ranked as being more important than the others based on a ranking system. The ranking system in one embodiment of the invention is based on capabilities of antennas to detect and record a high number of different RFID tags. By the redundant nature of the design, at least one antenna will read a highest number of the interrogated set of RFID tags and will earn the highest ranking. Except under a very improbable set of circumstances when all antennas read an exactly equal number of different RFID tags, it should be possible to develop a sequential reading algorithm that can result in efficient and accurate read operations by promoting more frequent reading of highly ranked antennas relative to the antennas with lowest rankings.

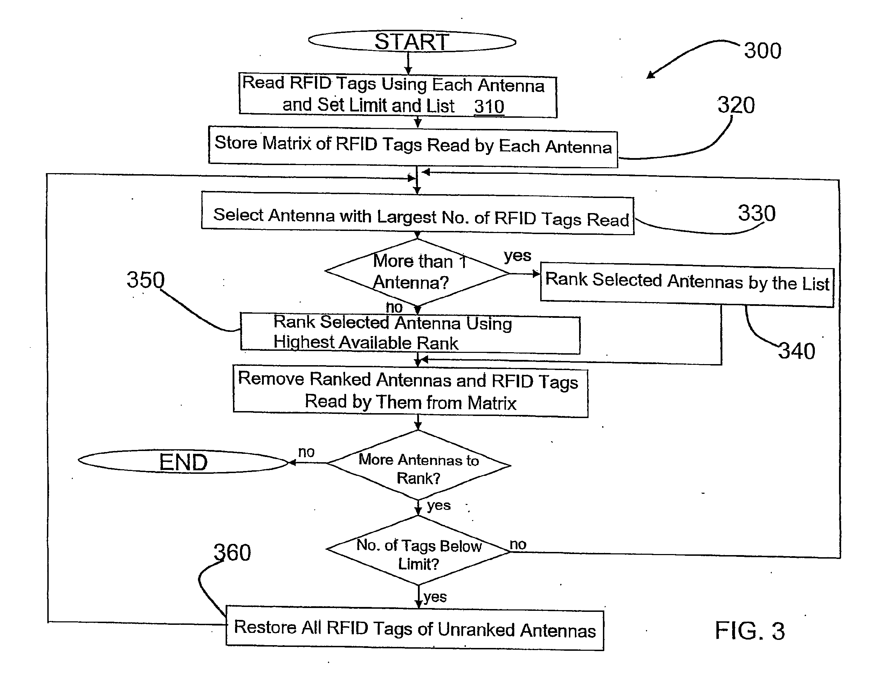

One RFID tag reading algorithm 300 that employs a ranking of the plurality of antennas is represented by the flow chart depicted in Fig. 3. The algorithm 300 is initiated by a step 310 of setting a list of available antennas, a limit on the minimal number of RFID tags considered statistically significant for antenna ranking and a complete RFID tag read process by all available antennas. All the RFID tags and all antennas that read the tags are stored in a matrix 320. Performing step 330, the RFID reader 140 reads the matrix and detects and selects at least one antenna with the largest number of detected and recorded RFID tags. The selected antennas are ranked by highest available ranks in steps 340 and 350 chosen in descending order of available ranks that remain after previously ranked antennas (if any) are associated with higher ranks. After any antenna ranking step, the antennas ranked in that step and the RFID tags read by the ranked antennas ranked in that step are removed from the data matrix in the step 350. The ranking process is continued until all avaiiabie antennas are ranked or, in another embodiment, the number of remaining RFID tags drops below the minimal number of RFID tags considered to be statistically significant. In the case that the number of remaining RFID tags drops below the minimum, it may be considered that one cluster of antennas is ranked and the ranking of the following cluster initiates by the restoring 360 of all RFID tags read by the unranked antennas in a new data matrix.

In one embodiment, the algorithm 300 tends to be insensitive to the situations where at least two antennas can read a common largest number of previously unread RFID tags. Under those circumstances the ranking can be determined automatically according to a preselected order, or the tied rank can be resolved using a predetermined secondary priority sort that orders antennas by attributes to be used under tie conditions. Regardless of the tiebreaking scheme, the differences in reading efficiency and accuracy caused by the higher ranking of one antenna over an equally valuable antenna tends to be negligible under most circumstances.

It may be beneficial for the antenna ranking algorithm 300 to be used in conjunction with a statistically significant numbers of RFID tags accessible to the antennas. This is due to exclusion of RFID tags read by the previously ranked antennas when the subsequent antennas are ranked, which results in the number of available RFID tags tending to decrease during the antenna ranking process. This correlation is related to system sensitivities, geometry, number and distribution of RFID tags, and the size and composition of tagged items. It may not be practical to rigidly establish a minimum number requirement of desired RFID tags for each and every application. As a result, it may be useful to customize the ranking process in accordance to the particular design and mode of operation, and to design the system to have a predetermined lowest number of RFID tags deemed sufficient for execution of the antenna ranking algorithm. In one embodiment the lowest number of RFID tags determined during customization of the ranking process may be written in the code for the processor 150 and remain constant during the use of the particular RFID reader. In another embodiment, the lowest number of RFID tags may be treated as a variable that may be inputted by the user of the storage system using an user interface device when the RFID tag monitoring system is powered up, or the lowest number may be permanently stored and recalled on power-up of the system unless the user decides to modify it.

In one embodiment of the invention, if the reading antennas determine that the number of RFID tags present in the storage volume is below the predetermined threshold number, the algorithm (and ranking) will discontinue and the preexisting ranking will continue to be used at least until the sufficient number of the present RFID tags is detected. This feature may guard the system from using an antenna ranking obtained using statistically inferior data set in preference to an older antenna ranking obtained using an older, statistically more significant, data set which may allow for reduced statistical errors and improved confidence intervals.

An embodiment of a ranking method in accordance with the present invention under the realistic circumstances of relatively large number of antennas interrogating comparable numbers of RFID tags may include successive application of the antenna ranking algorithm in phases. One example of the algorithm 300 applied to data acquired during a full read of all of the antennas until the number of the RFID tags that were not read by another, higher ranked antenna drops below the previously determined lowest limit number is shown in Fig. 3. When the lowest limit of RFID tags is reached, the cluster of previously ranked antennas are each assigned an appropriate ranking, while the remaining antennas are ranked for the subsequent descending rank ranges by the repeated application of the ranking algorithm on the restored data sets that include all the RFID tags read by remaining antennas. In other words, antennas are ranked cluster by cluster, while the full data set for the unranked antennas is restored for every subsequent cluster ranking.

If the read operation wherein the antennas are used in series to read the RFID tags, commencing with using the highest ranking antenna and subsequently using the antennas with progressively lower ranking to read the RFID tags, is interrupted before the completion of the read of the lowest ranked antenna, the incomplete read data does not need to be discarded or neglected. As the lowest ranked antennas function to provide redundancy necessary only under special circumstances, the incomplete data set is likely to contain complete information on all RFID tags, even if only some of the highly ranked antennas are read. Furthermore, when all relevant information about exact antenna and storage space geometry is accounted for, together with the parameters reflecting properties of the stored items and geometries of predominant storage patterns, it may be possible to establish error margins and confidence intervals for incomplete data as a function of a number of antennas read in the ranking order. One method of establishing of error margins and confidence intervals is to experimentally accumulate interrupted read data under controlled conditions and relate it to given inventories and storage patterns. In such way, the incomplete read data with known errors can be used in preference to previous outdated results with complete antenna readings whose accuracy may deteriorate in time. In the case of one test example, it is experimentally established that, for 77 regularly displaced RFID tags, incomplete read processes interrupted after reading of two antennas with highest ranking, can repeatedly and reproducibly provide full account for all present RFID tags in more than fifty consecutive interrupted read experiments.

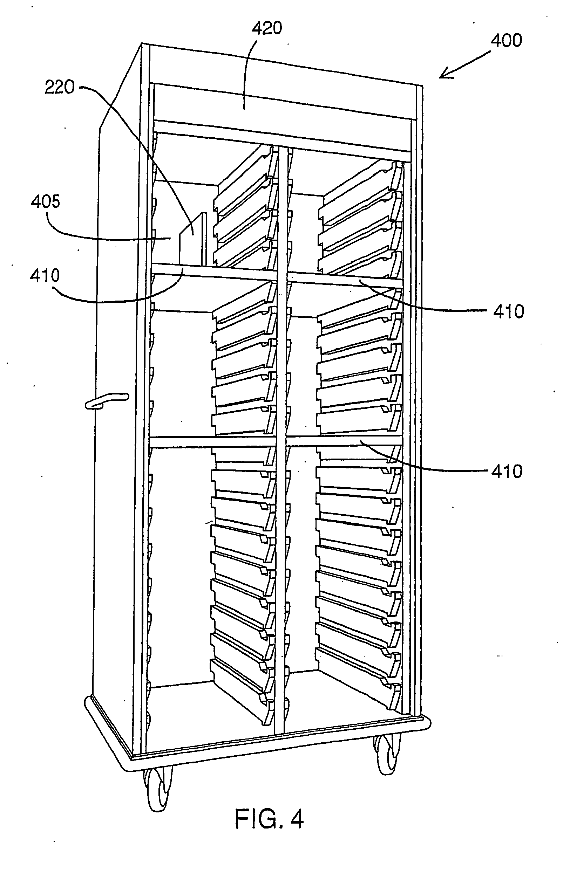

The performance of the disclosed reading method was tested in an embodiment of the storage structure given in Fig. 4. The storage structure of this embodiment is in form of a cart 400 where the storage compartment 405 is further subdivided by shelves 410 arranged to support at least one of the plurality of RFID tag marked items. Each shelf incorporates a plurality of antennas. The cart 400 also includes a compartment 420 arranged to house at least one multiplexer, at least one RFID reader 140 with processor 150, and at least one memory 160. The cart 400 is capable to function independently, or may be incorporated in a larger storage system, possibly including other carts or additional integrated storage and control devices.

Multiple repetitive tests were performed using a device similar to the one presented in Fig. 4. A set of twenty RFID tags are distributed on each of ten shelves each and read sequentially using built in antennas. Complete reads are reproducibly completed in less than two minutes of reading and processing time. Similar tests using fifty RFID tags on each of ten shelves were reproducibly read in less than five minutes. It should be noted that for this test, times to complete a read depend primarily on a number of antennas to read and a number of RFID tags, not on the reading algorithms.

A ranking algorithm in accordance with an embodiment was tested on a data set obtained by arranging total of 77 RFID tags on a shelf 410 (Fig. 4) including eight antennas 231-238 (Fig. 2). Every antenna was read in sequence and cumulative numbers of identified RFID tags recorded.

An example of the recorded data is given in TABLE 1. The rows are distinguished by the antennas while the columns are denoted by the cumulative numbers of identifications of the RFID tags. For convenient comparison, the actual cumulative numbers of read tags from the left of the TABLE 1 are renormalized to 100 and listed as rounded up percentages in the columns on the right. Also, the antennas are conveniently presented in the order of their pertinent ranking (highest on top).

**TABLE 1**

| #of reads | 0 | 1 | 2 | 3 | 4 | 5 | 6 | | 0 | 1 | 2 | 3 | 4 | 5 | 6 |
|---|---|---|---|---|---|---|---|---|---|---|---|---|---|---|---|
| Antenna | | | | | | | | | | | | | | | |
| 231 | 9 | 68 | 0 | 0 | 0 | 0 | 0 | | 12% | 88% | 0% | 0% | 0% | 0% | 0% |
| 232 | 0 | 44 | 35 | 0 | 0 | 0 | 0 | | 0% | 55% | 45% | 0% | 0% | 0% | 0% |
| 233 | 0 | 10 | 51 | 16 | 0 | 0 | 0 | | 0% | 13% | 66% | 21% | 0% | 0% | 0% |
| 234 | 0 | 5 | 13 | 56 | 3 | 0 | 0 | | 0% | 6% | 17% | 73% | 4% | 0% | 0% |
| 235 | 0 | 5 | 9 | 29 | 31 | 3 | 0 | | 0% | 6% | 12% | 38% | 44% | 4% | 0% |
| 236 | 0 | 4 | 7 | 8 | 44 | 12 | 2 | | 0% | 5% | 9% | 10% | 57% | 16% | 3% |
| 237 | 0 | 4 | 6 | 5 | 40 | 15 | 7 | | 0% | 5% | 8% | 6% | 51% | 19% | 9% |
| 238 | 0 | 4 | 6 | 4 | 30 | 22 | 14 | | 0% | 5% | 8% | 5% | 39% | 29% | 14% |

It can be seen that Large Figure 8 antenna 231 is the highest ranking antenna with 68 (88%) RFID tags read on the associated shelf 410. Large Loop antenna 232 was ranked second and was able to read all remaining 9 RFID tags. Thus, the two most highly ranked antennas left no unread tags. The remaining antennas can read a maximum of 5 RFID tags (as 4 tags are identified only once). Consequently, as all the RFID tags are identified with two antennas 231 and 232, those antennas represent the high ranked cluster while the remaining six are ranked in the subsequent cluster.

After all antennas are ranked, subsequent read operations are performed by the antennas in order of their ranking. In this way, even if a read operation is interrupted (e.g. by an individual accessing a shelf 410 and removing one or more items having an RFID tag), it is likely that the read operation will have provided an accurate survey of the RFID tags.

In this example, only two antennas need to be read in order to account for all the RFID tags used in this particular test Therefore, even if the antenna read process is interrupted after two highest ranked antennas are read the all RFID tags are accounted for. In this embodiment reading of two antennas can be achieved every 12-25 seconds. This is at least four times faster than the two minutes necessary for obtaining complete data using a complete antenna read. Also of value, reductions of time periods of forbidden access to the stored items in the RFID tag controlled carts from two minutes to a maximum of 25 seconds can improve psychological perception of the cart user from frustrating to acceptable.

In an embodiment, instead of a ranking antennas by read contribution, a desired redundancy level for each tag read is specified. After each completed read, the system may evaluate each shelf and antenna to determine which antennas are the most valuable in providing the desired redundancy level. In this process, each antenna is assigned a value based on its impact on read redundancy.

In this regard, while priorities are generally ordinal in nature, the read redundancy ranking generally will include assigning more than one antenna to each level. For example, every antenna that is required for providing a particular redundancy threshold may be assigned to level 1. Generally, this will mean that two or three antennas will be placed at a given level.

In a particular example, assuming that the antennas have been ranked according to their redundancy impact, the system can be configured to read such that there is at least one redundant read for each tag. For purposes of explanation, this may be referred to as a level of 2. The read operation may then proceed in accordance with the rankings such that all antennas ranked level 1 are read first, followed by all antennas ranked level 2. After all the level 2 antennas have been read, the read should be sufficiently valid to allow the read to be interrupted and the accuracy considered statistically acceptable to be retained. If the cart is uninterrupted the read will continue to process antennas with the goal of achieving additional levels of redundancy with each read (i.e., next read antennas will be those ranked level 3, then 4, etc.).

An embodiment of an algorithm for implementing this ranking may proceed as follows. For a first antenna, the system checks whether it is a connected antenna. This check may be implemented, for example, as a comparison with an inventory map of shelves and antennas. If the connected antenna has already been checked, then the algorithm loops to a subsequent antenna, otherwise, a count is established for how many of the tags on a list of unread tags would be added by reading that antenna. One approach to this step is to check, for each unread tag, whether it would be read by adding the current antenna to the level. For each such tag, an antenna count is incremented for that antenna. Once all tags on the unread list are queried in this manner, the antenna count is compared to the previous best antenna count and if better, the current antenna can be considered as the current best antenna. Where the addition of the current best antenna provides a new maximum level, then the system can be updated to allow a new maximum level for that inventory configuration. Once the remaining antennas are unable to add additional new tags, the analysis is complete for that level. If necessary or desired, the algorithm may loop to the next level.

In an embodiment, the system may further include a functionality for determining, handling and/or displaying certain error types. In a first error type, a number of tags read for a particular shelf may exceed a threshold number of tags expected. Where this error is encountered, an error message can indicate that there are too many tags for that shelf. A second error type is where the selected level of redundancy cannot be reached for a particular tag. Where this error occurs, that tag may be skipped. Alternately, an error message indicating that that the selected level is unreachable for the current tag/antenna configuration may be generated and stored and/or displayed. Where this error is detected prior to ranking antennas, the user can be prompted to select a different redundancy level for the ranking.

## Claims

1. A method of reading a plurality of RFID tags (220) using a plurality of antennas (231-238), the method **characterised by** comprising:
ranking a plurality of antennas based on RFID tags readable thereby, wherein the antenna that can read the most RFID tags will receive a highest ranking, and the antenna that can read the most RFID tags that were not read by another, higher ranked antenna will receive the next highest ranking, progressively until each of the antennas are ranked; and
executing a read operation wherein at least two of the antennas are used in series to read the RFID tags, commencing with using the highest ranking antenna and subsequently using the antennas with progressively lower rankings to read the RFID tags.

2. A method as in claim 1, where ranking a plurality of antennas comprises:
determining, for each of the antennas in the plurality of antennas, which RFID tags are readable;
storing, for each of the antennas, data indicating which RFID tags are readable thereby;
selecting one of the antennas from the plurality of antennas having the largest number of RFID tags readable and ranking it by the highest ranking;
subsequently determining, for each of the antennas other than the previously ranked antennas, which of the antennas can read a largest number of RFID tags, excluding the RFID tags readable by the previously ranked antennas, and ranking that antenna with the subsequent highest ranking in descending order;
progressively repeating the ranking step until all of the plurality of antennas are ranked by the descending order of rank.

3. A method as in claim 1, further comprising:
interrupting the read operation prior to completing the read operation for all of the plurality of antennas; and
determining a likelihood that the read operation has read all of the plurality of RFID tags.

4. A method as in claim 3, wherein the likelihood is determined based on the stored data.

5. A method as in claim 1, wherein when the read operation is not interrupted prior to completing the read operation for all of the plurality of antennas, the method further comprising:
re-ranking the plurality of antennas based on RFID tags readable thereby, wherein the antenna that can read the most RFID tags receives a highest ranking, and the antenna that can read the most RFID tags that were not read by another, higher ranked antenna will receive the next highest ranking, progressively until each of the antennas are ranked.

6. A method as in claim 1, wherein a single reader is used for the determining which tags are readable and for the read operation.

7. A method as in claim 1, further comprising, making available for use information indicative of items tagged with the read RFID tags.

8. A method as in claim 7, wherein the information is human readable information.

9. A method as in claim 7, wherein the information is machine-readable information.

10. A storage structure comprising:
a storage compartment (210) having space to store a plurality of items;
a plurality of antennas (231-238), configured to transmit electromagnetic energy to interrogate a plurality of RFID tags (220), disposed on at least some items stored in the storage compartment;
at least one RFID reader (140), operatively connected to the plurality of antennas, and configured to independently control a read operation of each antenna of the plurality of antennas;
**characterised in that** the storage structure comprises :
a memory (160), configured to receive and store information output by the RFID reader, the information being sufficient to identify, for each antenna, a numbers of readable RFID tags and an identity of each of the readable RFID tags; and
a processor(150), configured to access the memory and to rank the antennas, in accordance with the stored information, wherein the antenna that can read the most RFID tags that were not read by another, higher ranked antenna receives the next highest ranking, progressively until each of the antennas are ranked.

11. A storage structure of claim 10, where the storage compartment is arranged to support the at least one plurality of antennas arranged to transmit electromagnetic energy into the interior of the storage compartment and receive electromagnetic signals from the interior of the storage compartment.

12. A storage structure of claim 10, where the storage compartment comprises at least one shelf (410) arranged to support at least one of the plurality of items.

13. A storage structure of claim 12, where each shelf incorporates one plurality of antennas.

14. A storage structure of claim 13, where the plurality of antennas incorporated in each shelf is arranged to receive only electromagnetic signals carrying information that distinguish the RFID tags stored on particular shelf that incorporates said plurality of antennas.

15. A storage structure of claim 10, where the RFID reader, the memory, and the processor are integrated in a control unit arranged to control at least one plurality of the antennas.

16. A control unit of claim 15, where the control unit comprises a multiplexer circuit that uses a dedicated reader to control read operations from each plurality of the antennas.

17. A control unit of claim 15 where the control unit comprises a multiplexer circuit that uses a single reader to control read operations from all antennas.

18. A storage structure of claim 12 where the shelves, the RFID reader, the memory, and the processor are integrated in a cart unit capable to be placed and operate separately and independently from any other storage structure.

## Patentansprüche

1. Verfahren zum Lesen einer Mehrzahl von RFID-Tags (220) unter Verwendung einer Mehrzahl von Antennen (231 - 238), wobei das Verfahren **dadurch gekennzeichnet ist, dass** es umfasst:
progressives Rangordnen einer Mehrzahl von Antennen basierend auf RFID-Tags, die von ihnen gelesen werden können, wobei die Antenne, welche die meisten RFID-Tags lesen kann, einen höchsten Rang erhält, und die Antenne, welche die meisten RFID-Tags lesen kann, die von einer anderen, ranghöheren Antennen nicht gelesen wurden, den nächsthöchsten Rang erhält, bis jede der Antennen ranggeordnet ist; und
Ausführen eines Lesevorgangs, wobei mindestens zwei der Antennen in Reihe verwendet werden, um die RFID-Tags zu lesen, beginnend mit dem Verwenden der ranghöchsten Antenne und fortsetzend mit dem Verwenden der Antennen mit progressiv niedrigeren Rängen, um die RFID-Tags zu lesen.

2. Verfahren nach Anspruch 1, wobei das Rangordnen der Mehrzahl von Antennen umfasst:
Bestimmen, welche RFID-Tags gelesen werden können, für jede der Antennen in der Mehrzahl von Antennen;
Speichern für jede der Antennen von Daten, die anzeigen, welche RFID-Tags von ihr gelesen werden können;
Auswählen einer der Antennen aus der Mehrzahl von Antennen mit der größten Anzahl von lesbaren RFID-Tags und Rangordnen derselben durch den höchsten Rang;
anschließendes Bestimmen für jede der Antennen neben den vorher ranggeordneten Antennen, welche von den Antennen eine größte Anzahl von RFID-Tags mit Ausnahme der RFID-Tags lesen kann, die von den vorher ranggeordneten Antennen gelesen werden können, und Rangordnen dieser Antenne mit dem nächsthöchsten Rang in absteigender Reihenfolge;
progressives Wiederholen des Rangordnungsschritts, bis alle der Mehrzahl von Antennen durch die absteigende Reihenfolge von Rängen ranggeordnet sind.

3. Verfahren nach Anspruch 1, ferner umfassend:
Unterbrechen des Lesevorgangs vor dem Vollenden des Lesevorgangs für alle der Mehrzahl von Antennen; und
Bestimmen einer Wahrscheinlichkeit, dass der Lesevorgang alle der Mehrzahl von RFID-Tags gelesen hat.

4. Verfahren nach Anspruch 3, wobei die Wahrscheinlichkeit basierend auf den gespeicherten Daten bestimmt wird.

5. Verfahren nach Anspruch 1, wobei, wenn der Lesevorgang nicht vor dem Vollenden des Lesevorgangs für alle der Mehrzahl von Antennen unterbrochen wird, das Verfahren ferner umfasst:
erneutes progressives Rangordnen der Mehrzahl von Antennen basierend auf RFID-Tags, die von ihnen gelesen werden können, wobei die Antenne, welche die meisten RFID-Tags lesen kann, einen höchsten Rang erhält, und die Antenne, welche die meisten RFID-Tags lesen kann, die von einer anderen, ranghöheren Antenne nicht gelesen wurden, den nächsthöchsten Rang erhält, bis jede der Antennen ranggeordnet ist.

6. Verfahren nach Anspruch 1, wobei ein einziges Lesegerät zum Bestimmen, welche Tags gelesen werden können, und für den Lesevorgang verwendet wird.

7. Verfahren nach Anspruch 1, ferner umfassend ein Verfügbarmachen zur Verwendung von Informationen, welche Elemente anzeigen, die mit den RFID-Tags gekennzeichnet sind.

8. Verfahren nach Anspruch 7, wobei die Informationen Informationen sind, die vom Menschen gelesen werden können.

9. Verfahren nach Anspruch 7, wobei die Informationen maschinenlesbare Informationen sind.

10. Lagerkonstruktion, umfassend:
einen Lagerraum (210) mit Platz zum Lagern einer Mehrzahl von Elementen;
eine Mehrzahl von Antennen (231 - 238), die so konfiguriert sind, dass sie elektromagnetische Energie zum Abfragen einer Mehrzahl RFID-Tags (220) senden, die auf mindestens einigen Elementen angeordnet sind, die im Lagerraum gelagert sind;
mindestens ein RFID-Lesegerät (140), das funktionell mit der Mehrzahl von Antennen verbunden und so konfiguriert ist, dass es einen Lesevorgang jeder Antenne der Mehrzahl von Antennen unabhängig steuert;
**dadurch gekennzeichnet, dass** die Lagerkonstruktion umfasst:
einen Speicher (150), der so konfiguriert ist, dass er Informationen, die vom RFID-Lesegerät ausgegeben werden, empfängt und speichert, wobei die Informationen ausreichen, um für jede Antenne eine Anzahl von lesbaren RFID-Tags und eine Kennung jedes der lesbaren RFID-Tags zu identifizieren; und
einen Prozessor (150), der so konfiguriert ist, dass er auf den Speicher zugreift und die Antennen gemäß den gespeicherten Informationen progressiv rangordnet, wobei die Antenne, welche die meisten RFID-Tags lesen kann, die von einer anderen, ranghöheren Antenne nicht gelesen wurden, den nächsthöchsten Rang erhält, bis jede der Antennen ranggeordnet ist.

11. Lagerkonstruktion nach Anspruch 10, wobei der Lagerraum so ausgelegt ist, dass er die mindestens eine Mehrzahl von Antennen trägt, die so ausgelegt sind, dass sie elektromagnetische Energie in das Innere des Lagerraums senden und elektromagnetische Signale aus dem Inneren des Lagerraums empfangen.

12. Lagerkonstruktion nach Anspruch 10, wobei der Lagerraum mindestens ein Regal (410) umfasst, das so ausgelegt ist, dass es mindestens eines der Mehrzahl von Elementen trägt.

13. Lagerkonstruktion nach Anspruch 12, wobei jedes Regal eine Mehrzahl von Antennen enthält.

14. Lagerkonstruktion nach Anspruch 13, wobei die Mehrzahl von Antennen, die in jedem Regal enthalten sind, so ausgelegt ist, dass sie nur elektromagnetische Signale empfängt, die Informationen übertragen, welche die RFID-Tags unterscheiden, die auf einem bestimmten Regal untergebracht sind, das die Mehrzahl von Antennen enthält.

15. Lagerkonstruktion nach Anspruch 10, wobei das RFID-Lesegerät, der Speicher und der Prozessor in eine Steuereinheit integriert sind, die zum Steuern mindestens einer Mehrzahl der Antennen ausgelegt ist.

16. Steuereinheit nach Anspruch 15, wobei die Steuereinheit eine Multiplexerschaltung umfasst, die ein dediziertes Lesegerät verwendet, um Lesevorgänge von jeder Mehrzahl der Antennen zu steuern.

17. Steuereinheit nach Anspruch 15, wobei die Steuereinheit eine Multiplexerschaltung umfasst, die ein einziges Lesegerät verwendet, um Lesevorgänge von allen Antennen zu steuern.

18. Lagerkonstruktion nach Anspruch 12, wobei die Regale, das RFID-Lesegerät, der Speicher und der Prozessor in eine Wageneinheit integriert sind, die getrennt und unabhängig von jeder anderen Lagerkonstruktion angeordnet und gehandhabt werden kann.

## Revendications

1. Procédé de lecture d'une pluralité d'étiquettes RFID (220) utilisant une pluralité d'antennes (231 à 238), le procédé étant **caractérisé en ce qu'**il comprend :
le classement d'une pluralité d'antennes en se basant sur des étiquettes RFID ainsi lisibles, où l'antenne qui peut lire le plus d'étiquettes RFID recevra un classement le plus élevé, et l'antenne qui peut lire le plus d'étiquettes RFID qui n'ont pas été lues par une autre antenne de classement supérieur recevra le classement le plus élevé suivant, jusqu'à ce que, progressivement, chacune des antennes soit classée ; et
l'exécution d'une opération de lecture dans laquelle au moins deux des antennes sont utilisées en série pour lire les étiquettes RFID, en commençant par l'utilisation de l'antenne de classement le plus élevé et en utilisant ultérieurement les antennes avec des classements progressivement plus petits pour lire les étiquettes RFID.

2. Procédé selon la revendication 1, dans lequel le classement d'une pluralité d'antennes comprend :
la détermination, pour chacune des antennes dans la pluralité d'antennes, des étiquettes RFID qui sont lisibles ;
le stockage, pour chacune des antennes, de données indiquant les étiquettes RFID qui sont ainsi lisibles ;
la sélection de l'une des antennes de la pluralité d'antennes ayant le plus grand nombre d'étiquettes RFID lisibles et son classement avec le classement le plus élevé ;
la détermination ultérieure, pour chacune des antennes autres que les antennes antérieurement classées, des antennes qui peuvent lire un plus grand nombre d'étiquettes RFID, à l'exclusion des étiquettes RFID lisibles par les antennes classées antérieurement, et le classement de cette antenne avec le classement le plus élevé suivant par ordre décroissant ;
la répétition progressive de l'étape de classement jusqu'à ce que la totalité de la pluralité d'antennes soit classée par ordre de classement décroissant.

3. Procédé selon la revendication 1, comprenant en outre :
l'interruption de l'opération de lecture avant l'achèvement de l'opération de lecture pour la totalité de la pluralité d'antennes ; et
la détermination d'une probabilité selon laquelle l'opération de lecture a lu la totalité de la pluralité d'étiquettes RFID.

4. Procédé selon la revendication 3, dans lequel la probabilité est déterminée en se basant sur les données stockées.

5. Procédé selon la revendication 1, dans lequel lorsque l'opération de lecture n'est pas interrompue avant l'achèvement de l'opération de lecture pour la totalité de la pluralité d'antennes, le procédé comprend en outre :
le reclassement de la pluralité d'antennes en se basant sur les étiquettes RFID ainsi lisibles, où l'antenne qui peut lire le plus d'étiquettes RFID reçoit un classement le plus élevé, et l'antenne qui peut lire le plus d'étiquettes RFID qui n'ont pas été lues par une autre antenne de classement supérieur recevra le classement le plus élevé suivant, jusqu'à ce que, progressivement, chacune des antennes soit classée.

6. Procédé selon la revendication 1, dans lequel un seul lecteur est utilisé pour la détermination des étiquettes qui sont lisibles et pour l'opération de lecture.

7. Procédé selon la revendication 1, comprenant en outre la mise à disposition pour utilisation d'informations indicatives d'articles étiquetés avec les étiquettes RFID lues.

8. Procédé selon la revendication 7, dans lequel les informations sont des informations lisibles par l'utilisateur.

9. Procédé selon la revendication 7, dans lequel les informations sont des informations lisibles par une machine.

10. Structure de stockage comprenant :
un compartiment de stockage (210) ayant un espace pour stocker une pluralité d'articles ;
une pluralité d'antennes (231 à 238), configurée pour transmettre de l'énergie électromagnétique pour interroger une pluralité d'étiquettes RFID (220), disposée sur au moins certains articles stockés dans le compartiment de stockage ;
au moins un lecteur RFID (140), connecté de manière opérationnelle à la pluralité d'antennes, et configuré pour commander indépendamment une opération de lecture de chaque antenne de la pluralité d'antennes ;
**caractérisée en ce que** la structure de stockage comprend :
une mémoire (160), configurée pour recevoir et stocker des informations sorties par le lecteur RFID, les informations étant suffisantes pour identifier, pour chaque antenne, un nombre d'étiquettes RFID lisibles et une identité de chacune des étiquettes RFID lisibles ; et
un processeur (150), configuré pour accéder à la mémoire et classer les antennes, en conformité avec les informations stockées, où l'antenne qui peut lire le plus d'étiquettes RFID qui n'ont pas été lues par une autre antenne de classement plus élevé reçoit le classement le plus élevé suivant, jusqu'à ce que, progressivement, chacune des antennes soit classée.

11. Structure de stockage selon la revendication 10, dans laquelle le compartiment de stockage est agencé pour supporter la au moins une pluralité d'antennes agencée pour transmettre de l'énergie électromagnétique dans l'intérieur du compartiment de stockage et recevoir des signaux électromagnétiques de l'intérieur du compartiment de stockage.

12. Structure de stockage selon la revendication 10, dans laquelle le compartiment de stockage comprend au moins une étagère (410) agencée pour supporter au moins l'un de la pluralité d'articles.

13. Structure de stockage selon la revendication 12, dans laquelle chaque étagère incorpore une pluralité d'antennes.

14. Structure de stockage selon la revendication 13, dans laquelle la pluralité d'antennes incorporée dans chaque étagère est agencée pour ne recevoir que des signaux électromagnétiques portant des informations qui distinguent les étiquettes RFID stockées sur une étagère particulière qui incorpore ladite pluralité d'antennes.

15. Structure de stockage selon la revendication 10, dans laquelle l'étiquette RFID, la mémoire et le processeur sont intégrés dans une unité de commande agencée pour commander au moins une pluralité des antennes.

16. Unité de commande selon la revendication 15, dans laquelle l'unité de commande comprend un circuit multiplexeur qui utilise un lecteur dédié pour commander des opérations de lecture de chacune de la pluralité des antennes.

17. Unité de commande selon la revendication 15, dans laquelle l'unité de commande comprend un circuit multiplexeur qui utilise un seul lecteur pour commander des opérations de lecture de toutes les antennes.

18. Structure de stockage selon la revendication 12, dans laquelle les étagères, le lecteur RFID, la mémoire et le processeur sont intégrés dans une unité de carte capable d'être placée et de fonctionner séparément et indépendamment de toute autre structure de stockage.
